(19) Europäisches Patentamt
European Patent Office
Office européen des brevets

(11) **EP 1 798 392 B1**

(12) **EUROPÄISCHE PATENTSCHRIFT**

(45) Veröffentlichungstag und Bekanntmachung des Hinweises auf die Patenterteilung:
**11.06.2008 Patentblatt 2008/24**

(51) Int Cl.:
***F01N 11/00*** *(2006.01)* ***F01N 3/08*** *(2006.01)*
***F02D 41/02*** *(2006.01)*

(21) Anmeldenummer: **06124567.6**

(22) Anmeldetag: **22.11.2006**

(54) **Verfahren und Steuergerät zur Beurteilung der Funktionsfähigkeit eines NOx-Speicherkatalysators**

Method and control device for determining the functional capability of a NOx trap catalyst.

Procédé et dispositif de contrôle pour la détermination de la capacité de fonctionnement d'un catalyseur piège à NOx

(84) Benannte Vertragsstaaten:
**DE FR IT SE**

(30) Priorität: **15.12.2005 DE 102005059893**

(43) Veröffentlichungstag der Anmeldung:
**20.06.2007 Patentblatt 2007/25**

(73) Patentinhaber: **ROBERT BOSCH GMBH**
**70442 Stuttgart (DE)**

(72) Erfinder: **Hein, Ingo**
**71737 Kirchberg/Murr (DE)**

(56) Entgegenhaltungen:
**DE-A1- 10 036 453          DE-A1- 10 318 116**
**DE-A1- 19 847 874**

## Beschreibung

Stand der Technik

Die Erfindung betrifft ein Verfahren und ein Steuergerät zur Beurteilung der Funktionsfähigkeit eines $NO_x$-Speicherkatalysators im Abgas eines Verbrennungsmotors mit den Merkmalen der Oberbegriffe der unabhängigen Ansprüche.

Ein solches Verfahren und ein solches Steuergerät ist jeweils aus der DE 103 18 116 A1 bekannt. $NO_x$-Speicherkatalysatoren werden bei Kraftfahrzeugen verwendet, deren Verbrennungsmotoren dafür ausgelegt sind, möglichst weitgehend in einem verbrauchsoptimierten Magerbetrieb zu arbeiten. Beispiele solcher Verbrennungsmotoren arbeiten mit direkter Einspritzung von Kraftstoff in Brennräume, die kurz vor der Verbrennung erfolgt. Dieses Prinzip wird sowohl beim Ottomotor als auch beim Dieselmotor verwendet. Dabei werden die Verbrennungsmotoren im Magerbetrieb weitgehend entdrosselt mit großem Luftüberschuss betrieben.

Die in dieser Betriebsart vergleichsweise hohe Menge der vom Verbrennungsmotor emittierten Stickoxide wird in dem $NO_x$-Speicherkatalysator gespeichert. Um die Speicherfähigkeit aufrecht zu erhalten, wird der Magerbetrieb regelmäßig unterbrochen, um den $NO_x$-Speicherkatalysator in einer reduzierenden Abgasatmosphäre zu regenerieren.

Der Gesetzgeber in den USA und in Europa schreibt für Kraftfahrzeuge eine On Board Diagnose vor, bei der unter anderem auch die Funktionsfähigkeit des $NO_x$-Speicherkatalysators zu beurteilen ist.

Nach der DE 103 18 116 A1 wird im Steuergerät ein Rohemissionsmodell gerechnet, das die $NO_x$-Rohemissionen des Verbrennungsmotors im Schichtbetrieb nachbildet. Das Integral der Differenz aus den Rohemissionen und den hinter dem $NO_x$-Speicherkatalysator gemessenen Emissionen gibt eine Beladung des Speicherkatalysators mit $NO_x$ an. Integriert wird bis zur Unterbrechung des Magerbetriebs. Der Abbruch des Magerbetriebs wird in einer Ausgestaltung durch das Signal eines $NO_x$-Sensors, der hinter dem Speicherkatalysator angeordnet ist, ausgelöst. Der $NO_x$-Sensor liefert eine $NO_x$-Konzentration im Abgas.

Parallel zur Bildung der Beladung mit dem Integral des Rohemissionsmodells wird ein erster $NO_x$-Abgasparameter mit einem Speicherkatalysatormodell nachgebildet. Der erste $NO_x$-Abgasparameter ist zum Beispiel die $NO_x$-Konzentration, wie sie auch vom $NO_x$-Sensor gemessen wird. Das Speicherkatalysatormodell startet mit der Speicherfähigkeit eines Referenzkatalysators als erstem Wert für die Speicherkapazität und damit als Modellparameter.

Wenn sowohl das Rohemissionsmodell als auch das Speicherkatalysatormodell korrekte Ergebnisse liefern und wenn der verwendete $NO_x$-Speicherkatalysator genauso gut arbeitet wie der Referenzkatalysator, dann entspricht der erste Abgasparameter, der als modellierte $NO_x$-Konzentration gebildet wird, der von dem $NO_x$-Sensor gemessenen Konzentration, die als zweiter Abgasparameter verwendet wird.

Eine volle Beladung des $NO_x$-Speicherkatalysators führt zu einem Anstieg der $NO_x$-Konzentration hinter dem $NO_x$-Speicherkatalysator. Da die maximale Stickoxidspeicherkapazität des $NO_x$-Speicherkatalysators im Betrieb des Verbrennungsmotors durch Alterung absinkt, entsteht ein Unterschied zwischen der modellierten $NO_x$-Konzentration und der gemessenen $NO_x$-Konzentration. Nach der DE 103 18 116 A1 wird der erste $NO_x$-Abgasparameter an den zweiten $NO_x$-Abgasparameter durch Multiplizieren des Modellparameters mit einem Adaptionswert kleiner oder gleich 1 angepasst.

Mit anderen Worten: Durch die Anpassung wird der im Speicherkatalysatormodell verwendete erste Wert für die Speicherkapazität auf einen zweiten Wert verringert. Der Adaptionswert ergibt sich bei der DE 103 18 116 A1 als Quotient aus dem zweiten Wert für die Speicherkapazität im Zähler und dem ersten Wert für die Speicherkapazität im Nenner.

Mit zunehmender Verschlechterung des Katalysators wird der Adaptionswert und damit der im Speicherkatalysatormodell verwendete Wert der Speicherkapazität kleiner, was eine Beurteilung der Funktionsfähigkeit des $NO_x$-Speicherkatalysators in Abhängigkeit von dem Adaptionswert erlaubt. Der $NO_x$-Speicherkatalysator wird zum Beispiel dann als funktionsunfähig beurteilt, wenn seine Speicherkapazität auf weniger als 30 % der Speicherkapazität des Referenzkatalysators abgesunken ist, was durch Adaptionswerte repräsentiert wird, die kleiner als 0,3 sind. Durch die Verwendung des Adaptionswerts an Stelle des Werts der absoluten im Speicherkatalysator verwendeten Speicherkapazität tritt bei der Diagnose keine Abhängigkeit von der Größe des $NO_x$-Speicherkatalysators auf.

Da der im Speicherkatalysatormodell verwendete erste Wert für die Speicherkapazität in Abhängigkeit von Ergebnissen des $NO_x$-Rohmassenmodells adaptiert wird und der Adaptionswert das Diagnosekriterium für den $NO_x$-Speicherkatalysator darstellt, ist die Qualität der Diagnose von der Qualität des Rohmassenmodells abhängig.

Erfahrungen mit bekannten Rohmassenmodellen zeigen, dass die tatsächlichen Rohemissionen durch die bekannten Modelle nur mit begrenzter Genauigkeit wiedergegeben werden. Abweichungen von 30 % zwischen der tatsächlichen Beladung und der modellierten Beladung eines $NO_x$-Speicherkatalysators sind nicht ungewöhnlich. Eine solche Abweichung bildet sich identisch im Adaptionsfaktor ab. Mit dem bekannten Verfahren ist nicht feststellbar, ob eine Änderung des Adaptionsfaktors durch eine Verschlechterung des $NO_x$-Speicherkatalysators oder durch eine Ungenauigkeit im Rohmassenmodell verursacht wird. Dafür gibt es mehrere Ursachen:

Zu den wichtigsten Ursachen gehört eine mangelnde Genauigkeit bei der Rückführung von Abgas. Darüber hinaus wirkt sich die Feuchte der Ansaugluft auf die Verbrennung und damit auf die $NO_x$-Rohemissionen aus.

Es gibt bereits Ansätze, mit denen die Qualität des Rohmassenmodells verbessert werden soll. Die Erfolgsaussichten solcher Ansätze sind jedoch nur begrenzt, da die Ungenauigkeiten des Rohmassenmodells betriebspunktabhängig schwanken können und Drifts und Kennlinienfehler der Abgasrückführung separat berücksichtigt werden müssten. Außerdem müssten Umgebungsbedingungen wie die Feuchtigkeit der Ansaugluft berücksichtigt werden, was die Komplexität des Rohmassenmodells unerwünscht steigert.

Im Unterschied dazu wird bei der Erfindung eine tatsächliche Beladung des $NO_x$-Speicherkatalysators ermittelt und der Adaptionswert für die Diagnose in Abhängigkeit von der tatsächlichen Beladung korrigiert.

Vorteile der Erfindung

Mit der tatsächlichen Beladung können Einflüsse von Ungenauigkeiten des Rohmassenmodells bei der Diagnose eliminiert werden. Dies führt im Ergebnis zu einer wesentlichen Verbesserung der Zuverlässigkeit der Diagnose durch eine verbesserte Trennschärfe bei der Unterscheidung noch guter und bereits schlechter Speicherkatalysatoren. Dieser Vorteil ergibt sich ohne aufwändige Veränderungen des Rohmassenmodells. Die Ermittlung der tatsächlichen Beladung ist ohne zusätzliche Hardware durchführbar. Die tatsächliche Beladung ist zwar wegen vielfältiger Einflüsse nicht in Alleinstellung als Diagnosekriterium verwendbar, sie erlaubt aber im Rahmen der Erfindung eine Unterscheidung zwischen Einflüssen einer Alterung des $NO_x$-Speicherkatalysators und einer Ungenauigkeit des Rohmassenmodells auf den Adaptionswert. Darüber hinaus erlaubt die tatsächliche Beladung eine quantitative Bestimmung eines Einflusses einer Ungenauigkeit des Rohmassenmodells. Sie erlaubt damit auch eine quantitativ richtige Korrektur des unerwünschten Einflusses. Dieselben Vorteile ergeben sich durch das erfindungsgemäße Steuergerät.

Weitere Vorteile ergeben sich aus der Beschreibung, den abhängigen Ansprüchen und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Zeichnungen

Ausführungsbeispiele der Erfindung sind in den Zeichnungen dargestellt und werden in der nachfolgenden Beschreibung näher erläutert. Es zeigen, jeweils in schematischer Form:

Fig. 1 das technische Umfeld der Erfindung;

Fig. 2 eine Funktionsstruktur, die ein Ausführungsbeispiel des Verfahrens ausführt; und

Fig. 3 zeitliche Verläufe verschiedener Größen bei einem Betrieb des Verbrennungsmotors in Magerbetriebsphasen und Regenerationsphasen.

Beschreibung der Ausführungsbeispiele

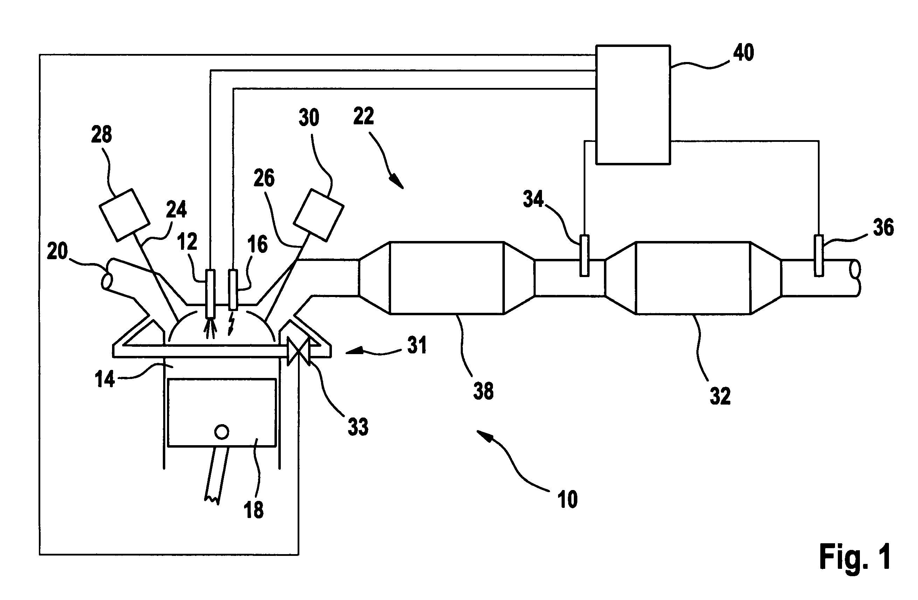

Figur 1 zeigt im Einzelnen einen Verbrennungsmotor 10 der insbesondere zum Antrieb eines Kraftfahrzeugs dient. Der dargestellte Verbrennungsmotor 10 arbeitet mit einer Direkteinspritzung von Kraftstoff über Injektoren 12 in Brennräume 14 des Verbrennungsmotors 10 nach dem Otto-Prinzip oder dem Diesel-Prinzip. Die Erfindung ist jedoch nicht auf eine Verwendung bei Verbrennungsmotoren 10 mit Direkteinspritzung beschränkt und kann auch bei einem Verbrennungsmotor mit Saugrohreinspritzung verwendet werden. Beim Ottomotor erfolgt eine Fremdzündung der Brennraumfüllung aus Luft und eingespritztem Kraftstoff mit einer Zündkerze 16. Jeder Brennraum 14 wird von einem Kolben 18 beweglich abgedichtet und über ein Ansaugrohr 20 mit Luft gefüllt. Verbrannte Füllungen des Brennraums 14 werden in ein Abgassystem 22 ausgestoßen.

Der Wechsel der Brennraumfüllungen (Gaswechsel) wird durch Gaswechselventile 24, 26 gesteuert, die von Aktoren 28, 30 synchron zur Bewegung des Kolbens 18 in Arbeitsspielen des Verbrennungsmotors 10 betätigt werden. Bei den Aktoren 28, 30 handelt es sich in der Regel um Nocken einer oder mehrerer Nockenwellen, die synchron zur Kolbenbewegung angetrieben werden. Über eine Abgasrückführung 31 wird bei geöffnetem Abgasrückführventil 33 Abgas in den Brennraum 14 zurückgeführt, um die Stickoxid-Rohemissionen des Verbrennungsmotors 10 zu verringern.

Das Abgassystem 22 weist zumindest einen $NO_x$-Speicherkatalysator 32 sowie einen ersten Abgassensor 34 und einen zweiten Abgassensor 36 auf. Der zweite Abgassensor 36 ist bevorzugt ein $NO_x$-Sensor, kann aber auch als sauerstoffempfindlicher Lambdasensor realisiert sein. Der zweite Abgassensor 36 liefert ein Maß für die $NO_x$-Konzentration des Abgases, das den $NO_x$-Speicherkatalysator 32 verlässt. Der erste Abgassensor 34 ist bevorzugt als sauerstoffempfindlicher Lambdasensor realisiert. Er kann zum Beispiel als Regelfühler für eine Regelung der Zusammensetzung der Brennraumfüllungen aus Kraftstoff und Luft dienen. Zusätzlich zu dem $NO_x$-Speicherkatalysator 32 kann das Abgassystem weitere Abgasreinigungskomponenten wie Drei-Wege-Katalysatoren und/oder Dieselpartikelfilter aufweisen. In der Darstellung der Fig. 1 ist ein Drei-Wege-Katalysator 38 stromaufwärts des $NO_x$-Speicherkatalysators 32 angeordnet. Er konvertiert die Schadstoffkomponenten HC, CO und $NO_x$ in die Komponenten $H_2O$, $CO_2$ und $N_2$.

Der $NO_x$-Speicherkatalysator 32 speichert die im Magerbetrieb mit Luftüberschuss in größerem Ausmaß entstehenden Stickoxide. Die Speicherkapazität des Speicherkatalysators 32 ist begrenzt. Seine Fähigkeit, weitere Stickoxide zu speichern, nimmt mit zunehmender Beladung und zunehmendem $NO_x$-Rohemissionsstrom des Verbrennungsmotors 10 ab. Zur Regeneration wird der Speicherkatalysator 32 durch eine reduzierende Abgasatmosphäre regeneriert. Diese kann vom Verbrennungsmotor 10 durch kurzzeitigen Betrieb mit einem fetten Kraftstoff/Luft-Gemisch, also mit Lambda < 1, erzeugt werden.

Die in dem Speicherkatalysator 32 gespeicherten Stickoxide $NO_x$ werden dadurch zu $N_2$ und $CO_2$ konvertiert. Nach einer derartigen Regeneration des Speicherkatalysators 32 kann dieser wieder erneut Stickoxide $NO_x$ aufnehmen. Eine Regeneration wird in der Regel durch ein Signal des zweiten Abgassensors 36 ausgelöst, das eine erhöhte $NO_x$-Konzentration hinter dem Speicherkatalysator 32 anzeigt. Der Verbrennungsmotor 10 wird vom Steuergerät 40 gesteuert, das dazu die Signale der Abgassensoren 34 und 36 und weitere Signale nicht dargestellter Sensoren für Betriebsparameter wie Drehzahl, Drehmomentanforderung durch einen Fahrer, Temperaturen, usw. verarbeitet. Das Steuergerät 40 führt darüber hinaus auch eine On Board Diagnose des Speicherkatalysators 32 aus.

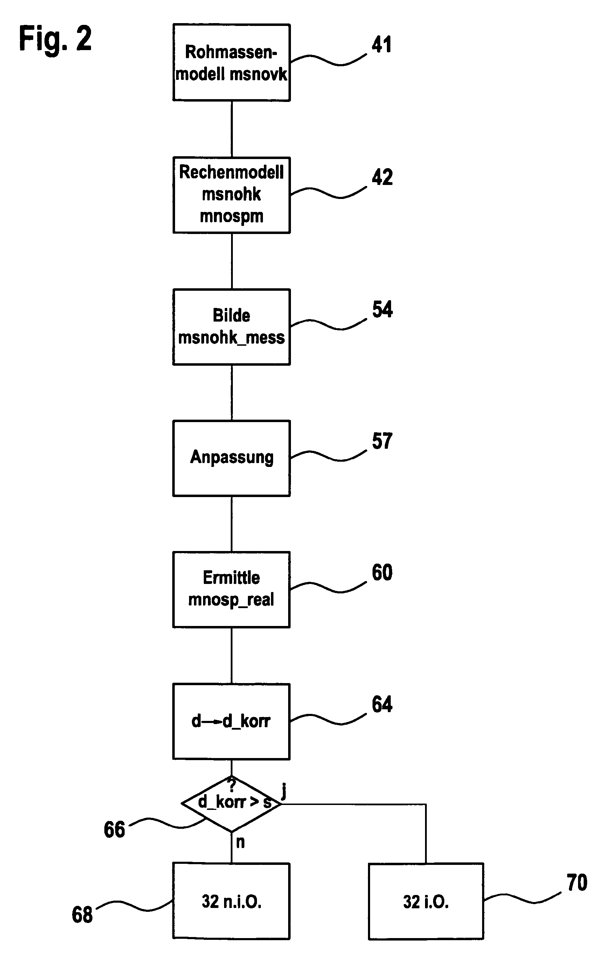

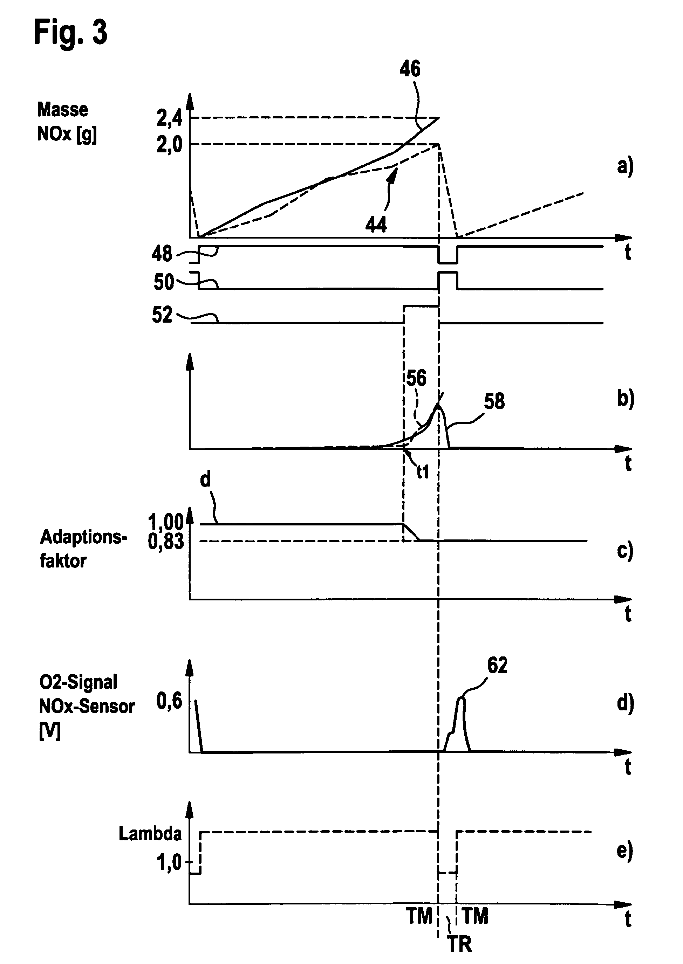

Ein Ausführungsbeispiel eines solchen On Board Diagnose-Verfahrens wird im Folgenden unter wechselndem Bezug auf die Figuren 2 und 3 erläutert.

Fig. 2 veranschaulicht eine Funktionsstruktur, die innerhalb des Steuergeräts 40, deren Module und/oder Schritte den Ablauf des Verfahrens steuern. Fig. 3 zeigt zeitliche Verläufe verschiedener Größen bei einem Betrieb des Verbrennungsmotors 10 in Magerbetriebsphasen TM und Regenerationsphasen TR.

In der Fig. 2 berechnet ein Rohmassenmodell 41 einen $NO_x$-Rohemissionsstrom msnovk vor dem $NO_x$-Speicherkatalysator 32 im Magerbetrieb aus Betriebsparametern des Verbrennungsmotors 10. Wesentliche Betriebsparameter sind in diesem Zusammenhang die Drehzahl, die eingespritzte Kraftstoffmasse und ein Abgasmassenstrom über die Abgasrückführung 31. Diese Größen sind im Steuergerät 40 bekannt, wobei der Abgasmassenstrom über die Abgasrückführung 32 als Funktion der Ansteuerung des Abgasrückführventils 33 geschätzt wird.

Aus diesem Rohmassenstrom msnovk berechnet ein Rechenmodell 42, das die Wirkung des Speicherkatalysators 32 nachbildet, einen ersten $NO_x$-Abgasparameter msnohk und einen ersten Wert mnospm für die Beladung des $NO_x$-Speicherkatalysators 32 unter Verwendung eines ersten Wertes MNODB_1 für die Speicherkapazität als Modellparameter. Der erste $NO_x$-Abgasparameter msnohk stellt den $NO_x$-Abgasmassenstrom hinter dem $NO_x$-Speicherkatalysator 32 dar. Der erste Wert MNODB_1 stellt in einer bevorzugten Ausgestaltung die Speicherkapazität eines voll funktionsfähigen Referenzkatalysators dar. In einer Ausgestaltung mit einem bestimmten Speicherkatalysator soll dieser Wert einer Masse von 2,4 g Stickoxid entsprechen.

Eine Ausgestaltung eines solchen Rechenmodells ist aus der DE 103 18 116 bekannt und berechnet die genannten Größen nach den beiden folgenden Gleichungen:

$$mnospm = \int (msnovk - msnohk)dt$$

$$msnohk = \frac{msnovk}{1 + \exp\left(1 - \dfrac{mnospm}{MNODB\_1}\right) * K(msnohk)}$$

K ist dabei ein Faktor, der von dem $NO_x$-Abgasmassenstrom msnohk abhängt. Der erste $NO_x$-Abgasparameter msnohk wird also als Funktion eines in den $NO_x$-Speicherkatalysator 32 einfließenden $NO_x$-Massenstroms msnovk modelliert, wobei der in den $NO_x$-Speicherkatalysator 32 einfließende $NO_x$-Massenstrom msnovk durch ein Rohemissionsmodell 41 bestimmt wird. Weitere Details eines solchen Rechenmodells 42 sind der DE 102 18 116 zu entnehmen.

Es versteht sich, dass die Erfindung auch Rechenmodelle 42 verwenden kann, mit denen der erste Abgasparameter msnohk und der erste Wert mnospm für die Beladung auf andere Weise gebildet werden.

Fig. 3a zeigt mit der Kurve 44 einen typischen Verlauf des ersten Werts der Beladung mnospm in g über der Zeit t. Die modellierte Beladung mnospm steigt im Magerbetrieb an und sinkt während der Regeneration ab. Dieses Muster wird wiederholt durchlaufen, wobei eine Regenerierung zum Beispiel dann ausgelöst wird, wenn der Abgassensor 36 hinter dem $NO_x$-Speicherkatalysator 32 einen Anstieg der $NO_x$-Konzentration registriert. Fig. 3a zeigt weiter den Verlauf 46 einer tatsächlichen Beladung des $NO_x$-Speicherkatalysators 32.

Der tatsächliche Verlauf 46 liegt über dem modellierten Verlauf 44. Dies wird typischerweise durch Ungenauigkeiten des Rohmassenmodells 41 verursacht. In der Darstellung der Fig. 2 ist der $NO_x$-Speicherkatalysator am Ende einer Magerbetriebsphase mit 2,4 g $NO_x$ beladen, während der durch das Rechenmodell 42 gebildete erste Wert der Beladung nur 2 g beträgt. Ebenfalls in der Fig. 3a sind binäre Steuersignale 48, 50 und 52 dargestellt. Bei hohem Pegel des Signals 48 wird der Verbrennungsmotor 10 im Magerbetrieb betrieben. Bei hohem Pegel des Signals 50 wird der $NO_x$-Speicherkatalysator 32 in reduzierender Abgasatmosphäre regeneriert. Bei hohem Pegel des Signals 52 ist die Anpassung des ersten $NO_x$-Abgasparameters an den zweiten $NO_x$-Abgasparameter aktiv.

In einem Schritt 54 in der Fig. 2 erfolgt die Bildung eines zweiten $NO_x$-Abgasparameters msnohk_mess in Abhängigkeit von einem Signal des hinter dem $NO_x$-Speicherkatalysator 32 angeordneten Abgassensors 36. Der Abgassensor 36 ist bevorzugt ein $NO_x$-Sensor und liefert eine Information über die $NO_x$-Konzentration im Abgas hinter dem $NO_x$-Speicherkatalysator 32. Aus dieser Information und weiteren Informationen über den Abgasvolumenstrom, die im Steuergerät 40 vorliegen oder gebildet werden, bildet das Steuergerät 40 den zweiten $NO_x$-Abgasparameter msnohk_mess als Massenstrom oder alternativ als $NO_x$-Konzentration.
Der erste $NO_x$-Abgasparameter wird dann ebenfalls als Massenstrom oder als $NO_x$-Konzentration bereitgestellt.

Fig. 3b zeigt in gestrichelter Form den Verlauf 56 des ersten $NO_x$-Abgasparameters msnohk und den Verlauf 58 des zweiten $NO_x$-Abgasparameters msnohk_mess. Wegen des zu kleinen ersten Werts der Beladung aus dem Rechenmodell 42 hält das Rechenmodell 42 den $NO_x$-Speicherkatalysator 32 noch für aufnahmefähig und zeigt noch keinen Anstieg des ersten $NO_x$-Abgasparameters msnohk 56, als der zweite $NO_x$-Abgasparameter msnohk_mess 58 zum Zeitpunkt t1 bereits ansteigt. Die folgende Anpassung des ersten $NO_x$-Abgasparameters msnohk an den zweiten $NO_x$-Abgasparameter msnohk_mess zeigt sich in dem vergleichsweise unstetigeren Verlauf 56 im Bereich aktiver Adaption bei hohem Pegel des Signals 52.

Die Anpassung erfolgt im Schritt 57 der Fig. 2 während eines Anstiegs einer $NO_x$-Konzentration hinter dem $NO_x$-Speicherkatalysator 32 in einer Magerbetriebsphase TM vor einer Regeneration des $NO_x$-Speicherkatalysators 32 und gleicht das Rechenmodell 42 mit der Realität ab. Der Schritt 57 wird bei hohem Pegel des Signals 52 in der Fig. 3 durchgeführt und verändert den Modellparameter MNODB im Rechenmodell 42 von einem ersten Wert MNODB_1 für die Speicherkapazität auf einen zweiten Wert MNODB_2 der Speicherkapazität.

Ohne eine solche Adaption hätte das Rechenmodell 42 den Anstieg dann synchron zum tatsächlichen Anstieg modelliert, wenn der modellierte $NO_x$-Speicherkatalysator schon bei einer Beladung von 2 g voll beladen gewesen wäre, also wenn der Wert des Modellparameters MNDOB nicht 2,4 g, sondern 2 g betragen hätte.

Die Veränderung erfolgt bevorzugt durch Multiplikation des ersten Werts MNODB_1 mit einem Adaptionsfaktor d. Mit anderen Worten:

$$2g = MNODB\_2 = d * MNODB\_1 = d * 2,4g$$
$$\Rightarrow d = 2/2,4$$

Die Einstellung eines solchen Adaptionsfaktors d bei aktiver Adaption ist in der Fig. 3c dargestellt, die eine Änderung des Adaptionsfaktors d vom Wert 1 auf den Wert 0,83 zeigt.

Damit wurde der aus dem Verlauf der Kurven 44 und 46 ersichtliche Fehler des Rohmassenmodells auf eine Verkleinerung des Modellparameters MNODB abgebildet. Erfolgt die Diagnose des $NO_x$-Speicherkatalysators 32 auf der Basis eines solchen Adaptionsfaktors d, wird er tendenziell schlechter beurteilt als er tatsächlich ist. Unter der Voraussetzung eines neuen Katalysators 32 sollte d = 1 sein. Die vom ungenauen Rohmassenmodell verursachte Verschlechterung auf d = 0,83 beeinträchtigt daher die Diagnosequalität.

Wenn man ein genaues Rohmassenmodell und einen gealterten $NO_x$-Speicherkatalysator voraussetzt, wird der Anstieg des zweiten $NO_x$-Abgasparameters msnohk_mess dem Anstieg des ersten Abgasparameters msnohk ebenfalls vorauseilen. Dies führt ebenfalls zu einer Verringerung des Modellparameters für die Speicherfähigkeit im Rechenmodell 42 und damit zu einer Verkleinerung des Adaptionsfaktors d.

Mit anderen Worten: Ungenauigkeiten des Rohmassenmodells 41 und tatsächliche Verschlechterungen des $NO_x$-Speicherkatalysators 32 sind mit dem so gebildeten Adaptionsfaktor d noch nicht zu unterscheiden.

Daher wird der Adaptionsfaktor d im Rahmen des Gegenstands dieser Anmeldung noch einmal korrigiert, um den Einfluss von Ungenauigkeiten des Rohmassenmodells 41 zu eliminieren.

Dazu erfolgt im Schritt 60 der Fig. 2 eine Ermittlung einer tatsächlichen Beladung mnosp_real des Speicherkatalysators 32 bei seiner Regeneration. Je höher die tatsächliche Beladung mnosp_real ist, desto mehr Reduktionsmittel muss dem $NO_x$-Speicherkatalysator durch die reduzierende Abgasatmosphäre zugeführt werden. Der Reduktionsmittelverbrauch ist mit dem in der Fig. 1 dargestellten System ermittelbar. Es ist daher bevorzugt, den Reduktionsmittelverbrauch zu ermitteln, daraus auf die tatsächliche Beladung mnosp_real zu schließen, und den Adaptionsfaktor in Abhängigkeit von der tatsächlichen Beladung mnosp_real zu korrigieren.

Zur Ermittlung der tatsächlichen Beladung mnosp_real erfolgt im Schritt 60 zunächst eine Auswertung der Signale der Abgassonden 34 und 36. Als $NO_x$-Sensor ist der Abgassensor 36 in der Regel auch in der Lage, Sauerstoffkonzentrationen durch eine in den Sensor 36 integrierte Nernstsonde zu messen. Der erste Abgassensor 34 ist bevorzugt ein sauerstoffempfindlicher Lambdasensor. Der Verbrauch an Regenerationsmittel ergibt sich dann aus Werten für einen Abgasmassenstrom durch den $NO_x$-Speicherkatalysator 32, die während einer Regeneration mit einem Gewichtungsfaktor gewichtet und aufsummiert werden, der einen Sauerstoffmangel anzeigt. Ein solcher Gewichtungsfaktor wird in einer Ausgestaltung aus dem Signal des ersten Abgassensors 34 gebildet.

Fig. 3d zeigt die Sauerstoffkonzentration, respektive das korrespondierende Spannungssignal der Nernstsonde hinter dem $NO_x$ Speicherkatalysator 32 über dem Lambdawert der Fig. 3e, mit dem der Verbrennungsmotor 10 betrieben wird. Eine hohe Nernstspannung korrespondiert bekanntlich zu einer niedrigen Sauerstoffkonzentration, wie sie in einer reduzierenden Abgasatmosphäre herrscht.

Während der Zeitspannen mit niedrigen Lambdawerten wird die reduzierende Atmosphäre vor dem $NO_x$-Speicherkatalysator 32 erzeugt und damit Reduktionsmittel in den $NO_x$-Speicherkatalysator 32 eingebracht. Das Reduktionsmittel wird zunächst zur Reduktion der gespeicherten Stickoxide verbraucht. Es wird daher erst verzögert als niedrige Sauerstoffkonzentration hinter dem $NO_x$-Speicherkatalysator 32 gemessen. Bei konstantem Abgasmassenstrom signalisiert der Peak 62 den Zeitpunkt ab dem eine geringe Sauerstoff-Konzentration hinter dem Speicherkatalysator 32 auftritt. Dies zeigt einen Durchbruch von Reduktionsmittel an. Der Reduktionsmittel-Eintrag vor dem Peak ist proportional zum $O_2$- und $NO_x$-Inhalt des Speicherkatalysators 32.

Im Schritt 64 der Fig. 2 wird der Adaptionswert d für die Diagnose als Funktion der tatsächlichen Beladung korrigiert. Dabei ist bevorzugt, dass der Adaptionswert d mit einem Abweichungsfaktor f_abw korrigiert wird, der als Quotient aus dem ersten Wert für die Beladung mnospm im Zähler und der ermittelten tatsächlichen Beladung mnosp_real im Nenner gebildet wird. Ein korrigierter Adaptionswert d_korr ergibt sich dann durch Teilen des Adaptionswerts d durch den Korrekturwert f_abw. Dann gilt:

$$d\_korr = d * \frac{1}{f\_abw} = \frac{MNODB\_2}{MNODB\_1} * \frac{mnosp\_real}{mnospm}$$

Unter der Voraussetzung eines ungenauen Rohmassenmodells 41 mit den oben angegeben Werten von 2 g für die modellierte Beladung mnospm und 2,4 g für die tatsächliche Beladung mnosp_real ergibt sich d_korr zu

$$d\_korr = d * \frac{1}{f\_abw} = \frac{MNODB\_2}{MNODB\_1} * \frac{mnosp\_real}{mnospm} = \frac{2}{2,4} * \frac{2,4}{2} = 1$$

Mit anderen Worten: Der unerwünschte Einfluss des Rohmassenmodells wurde erfolgreich eliminiert.

Erwünschte Einflüsse des Rohmassenmodells bleiben dagegen erhalten. In der Realität erfolgt eine Regenerierung nicht immer genau dann, wenn die Speicherkapazität zu 100 % erschöpft ist. Als Beispiel werde folgende Situation betrachtet. MNODB_1 sei 2,4g. Das Rohmassenmodell 41 und das Rechenmodell 42 sollen jeweils genau arbeiten. Aus irgendwelchen Gründen werde eine Regeneration bereits bei einer Beladung mnospm von 1,8 g ausgelöst. Weil die Modelle 41, 42 genau arbeiten, findet keine Anpassung statt (MNODB_2 = MNODB_1). Für d_korr gilt dann:

$$d\_korr = d * \frac{1}{f\_abw} = \frac{MNODB\_2}{MNODB\_1} * \frac{mnosp\_real}{mnospm} = \frac{2,4}{2,4} * \frac{1,8}{1,8} = 1$$

Die aus Gründen von Streuungen erfolgte frühere Auslösung der Regeneration beeinflusst nicht die Diagnose, was erwünscht ist. Hätte man dagegen den Wert der tatsächlichen Beladung mnosp_real von 1,8 g ohne Zwischenschalten der Modelle 41, 42 direkt auf die Speicherkapazität von 2,4 g bezogen, hätte man ein irreführendes Diagnoseergebnis erhalten. Erst das Rechenmodell 42 zusammen mit dem Abgleich durch die Anpassung des ersten $NO_x$-Abgasparameters msnohk an den zweiten $NO_x$-Abgasparameter msnohk_mess und der Berücksichtigung einer tatsächlichen Beladung mnosp_real führt zu dem gewünschten Erfolg einer gesteigerten Zuverlässigkeit der Diagnose.

Der korrigierte Adaptionswert d_korr wird im Schritt 66 mit einem Diagnose-Schwellenwert S verglichen werden und liefert dann eine zuverlässige Aussage über die Funktionsfähigkeit des Katalysators 32. Ist d_korr kleiner als S, ist der Katalysator 32 nicht mehr in Ordnung (32 n.i.O), was im Schritt 68 zu einer entsprechenden Fehlermeldung und Anzeige und/oder Abspeicherung der Fehlermeldung führt. Ist d_korr dagegen größer als S, wird der Katalysator 32 im Schritt 70 als in Ordnung (32 i.O.) beurteilt.

**Patentansprüche**

1. Verfahren zur Beurteilung der Funktionsfähigkeit eines $NO_x$-Speicherkatalysators (32) im Abgas eines Verbrennungsmotors (10) mit den Schritten: (42) Bilden eines ersten $NO_x$-Abgasparameters (msnohk) und eines ersten Wertes (mnospm) für die Beladung des $NO_x$-Speicherkatalysators (32) mit einem Rechenmodell (42) unter Verwendung eines ersten Werts (MNODB_1) für die Speicherkapazität als Modellparameter, (54) Bilden eines zweiten $NO_x$-Abgasparameters (msnohk_mess) in Abhängigkeit von einem Signal eines hinter dem $NO_x$-Speicherkatalysator (32) angeordneten Abgassensors (36), (57) Anpassen des ersten $NO_x$-Abgasparameters (msnohk) an den zweiten $NO_x$-Abgasparameter (msnohk_mess) durch Verändern des Modellparameters mit einem Adaptionswert (d) auf einen zweiten Wert (MNODB_2) der Speicherkapazität und (66) Beurteilen der Funktionsfähigkeit des $NO_x$-Speicherkatalysators (32) in Abhängigkeit von dem Adaptionswert (d), **dadurch gekennzeichnet, dass** eine tatsächliche Beladung (mnosp_real) des $NO_x$-Speicherkatalysators (32) ermittelt wird (60) und der Adaptionswert (d) für die Diagnose als Funktion der tatsächlichen Beladung (mnosp_real) korrigiert wird (64).

2. Verfahren nach Anspruch 1, **dadurch gekennzeichnet, dass** der Adaptionswert (d) mit einem Abweichungsfaktor korrigiert wird, der als Quotient aus dem ersten Wert (mnsopm) für die Beladung im Zähler und der ermittelten tatsächlichen Beladung (mnosp_real) im Nenner gebildet wird.

3. Verfahren nach Anspruch 2, **dadurch gekennzeichnet, dass** der Adaptionswert (d) durch den Korrekturwert geteilt wird.

4. Verfahren nach einem der Ansprüche 1 bis 3, **dadurch gekennzeichnet, dass** der erste $NO_x$-Abgasparameter (msnohk) als Funktion eines in den $NO_x$-Speicherkatalysator (32) einfließenden $NO_x$-Massenstroms (msnovk) modelliert wird.

5. Verfahren nach einem der vorhergehenden Ansprüche, **dadurch gekennzeichnet dass** der in den $NO_x$-Speicherkatalysator (32) einfließende $NO_x$-Massenstrom (msnovk) durch ein Rohemissionsmodell (41) bestimmt wird.

6. Verfahren nach einem der vorhergehenden Ansprüche, **dadurch gekennzeichnet, dass** die tatsächliche Beladung (mnosp_real) aus einem Verbrauch an Regenerationsmittel bei einer Regeneration des $NO_x$-Speicherkatalysators (32) bestimmt wird.

7. Verfahren nach Anspruch 6, **dadurch gekennzeichnet, dass** der Verbrauch an Regenerationsmittel aus Werten für einen Abgasmassenstrom durch den $NO_x$-Speicherkatalysator (32) bestimmt wird, die während einer Regeneration mit einer Sauerstoffkonzentration gewichtet und aufsummiert werden.

8. Verfahren nach einem der vorhergehenden Ansprüche, **dadurch gekennzeichnet, dass** der erste (msnohk) und der zweite Abgasparameter (msnohk_mess) jeweils als $NO_x$-Massenstrom oder als $NO_x$-Konzentration bestimmt werden.

9. Verfahren nach einem der vorhergehenden Ansprüche, **dadurch gekennzeichnet, dass** das Anpassen (57) des ersten $NO_x$-Abgasparameters (msnohk) an den zweiten $NO_x$-Abgasparameter (msnohk_mess) durch Verändern des Modellparameters (MNODB) mit einem Adaptionswert (d) während eines Anstiegs einer $NO_x$. Konzentration hinter dem $NO_x$-Speicherkatalysator (32) in einer Magerbetriebsphase (TM) vor einer Regeneration des $NO_x$-Speicherkatalysators (32) erfolgt.

10. Steuergerät (40) zur Beurteilung der Funktionsfähigkeit eines $NO_x$-Speicherkatalysators (32) im Abgas eines Verbrennungsmotors (10), wobei das Steuergerät (40) einen ersten $NO_x$-Abgasparameter (msnohk) und einen ersten Wert (mnospm) für die Beladung des $NO_x$-Speicherkatalysators (32) mit einem Rechenmodell (42) unter Verwendung eines ersten Werts (MNODB_1) für die Speicherkapazität als Modellparameter, einen zweiten $NO_x$-Abgasparameter (msnohk_mess) in Abhängigkeit von einem Signal eines hinter dem $NO_x$-Speicherkatalysator (32) angeordneten Abgassensors (36) bildet, den ersten $NO_x$-Abgasparameter (msnohk) an den zweiten $NO_x$-Abgasparameter (msnohk_mess) durch Verändern des Modellparameters (MNODB) mit einem Adaptionswert (d) auf einen zweiten Wert (MNODB_2) der Speicherkapazität anpasst, und die Funktionsfähigkeit des $NO_x$-Speicherkatalysators (32) in Abhängigkeit von dem Adaptionswert (d) beurteilt, **dadurch gekennzeichnet, dass** das Steuergerät (40) eine tatsächliche Beladung (mnosp_real) des $NO_x$-Speicherkatalysators (32) ermittelt und den Adaptionswert (d) für die Diagnose als Funktion der tatsächlichen Beladung (mnosp_real) korrigiert.

**11.** Steuergerät (40) nach Anspruch 10, **dadurch gekennzeichnet, dass** es den Ablauf von einem der Verfahren nach den Ansprüchen 2 bis 9 steuert.

## Claims

**1.** Method for evaluating the functionality of a $NO_x$ storage catalytic converter (32) in the exhaust gas of an internal combustion engine (10), having the steps: (42) forming a first $NO_x$ exhaust gas parameter (msnohk) and a first value (mnospm) for the loading of the $NO_x$ storage catalytic converter (32) by means of a mathematical model (42) using a first value (MNODB_1) for the storage capacity as a model parameter, (54) forming a second $NO_x$ exhaust gas parameter (msnohk_mess) as a function of a signal of an exhaust-gas sensor (36) arranged downstream of the $NO_x$ storage catalytic converter (32), (57) adapting the first $NO_x$ exhaust gas parameter (msnohk) to the second $NO_x$ exhaust gas parameter (msnohk_mess) by varying the model parameter with an adaptation value (d) to a second value (MNODB_2) of the storage capacity, and (66) evaluating the functionality of the $NO_x$ storage catalytic converter (32) as a function of the adaptation value (d), **characterized in that** an actual loading (mnosp_real) of the $NO_x$ storage catalytic converter (32) is determined (60) and the adaptation value (d) for the diagnosis is corrected (64) as a function of the actual loading (mnosp_real).

**2.** Method according to Claim 1, **characterized in that** the adaptation value (d) is corrected with a deviation factor which is formed as a quotient from the first value (mnsopm) for the loading in the numerator and the determined actual loading (mnosp_real) in the denominator.

**3.** Method according to Claim 2, **characterized in that** the adaptation value (d) is divided by the corrective value.

**4.** Method according to one of Claims 1 to 3, **characterized in that** the first $NO_x$ exhaust gas parameter (msnohk) is modelled as a function of a $NO_x$ mass flow (msnovk) flowing into the $NO_x$ storage catalytic converter (32).

**5.** Method according to one of the preceding claims, **characterized in that** the $NO_x$ mass flow (msnovk) flowing into the $NO_x$ storage catalytic converter (32) is determined by means of an untreated emissions model (41).

**6.** Method according to one of the preceding claims, **characterized in that** the actual loading (mnosp_real) is determined from a consumption of regeneration medium during a regeneration of the $NO_x$ storage catalytic converter (32).

**7.** Method according to Claim 6, **characterized in that** the consumption of regeneration medium is determined from values for an exhaust gas mass flow through the $NO_x$ storage catalytic converter (32), which values, during a regeneration, are weighted with an oxygen concentration and added up.

**8.** Method according to one of the preceding claims, **characterized in that** the first (msnohk) and the second exhaust gas parameter (msnohk_mess) are in each case determined as a $NO_x$ mass flow or as a $NO_x$ concentration.

**9.** Method according to one of the preceding claims, **characterized in that** the adaptation (57) of the first $NO_x$ exhaust gas parameter (msnohk) to the second $NO_x$ exhaust gas parameter (msnohk_mess) by varying the model parameter (MNODB) with an adaptation value (d) takes place during a rise in a $NO_x$ concentration downstream of the $NO_x$ storage catalytic converter (32) in a lean-burn phase (TM) before a regeneration of the $NO_x$ storage catalytic converter (32).

**10.** Control unit (40) for evaluating the functionality of a $NO_x$ storage catalytic converter (32) in the exhaust gas of an internal combustion engine (10), with the control unit (40) forming a first $NO_x$ exhaust gas parameter (msnohk) and a first value (mnospm) for the loading of the $NO_x$ storage catalytic converter (32) by means of a mathematical model (42) using a first value (MNODB_1) for the storage capacity as a model parameter, a second $NO_x$ exhaust gas parameter (msnohk_mess) as a function of a signal of an exhaust-gas sensor (36) arranged downstream of the $NO_x$ storage catalytic converter (32), adapting the first $NO_x$ exhaust gas parameter (msnohk) to the second $NO_x$ exhaust gas parameter (msnohk_mess) by varying the model parameter with an adaptation value (d) to a second value (MNODB_2) of the storage capacity, and evaluating the functionality of the $NO_x$ storage catalytic converter (32) as a function of the adaptation value (d), **characterized in that** the control unit (40) determines an actual loading (mnosp_real) of the $NO_x$ storage catalytic converter (32) and corrects the adaptation value (d) for the diagnosis as a function of the actual loading (mnosp_real).

**11.** Control unit (40) according to Claim 10, **characterized in that** said control unit (40) controls the progression of one of the methods according to Claims 2 to 9.

**Revendications**

**1.** Procédé de contrôle de la capacité de fonctionnement d'un catalyseur accumulateur d'oxydes d'azote $NO_x$ (32) contenus dans les gaz d'échappement émis par un moteur à combustion interne (10) comprenant les étapes suivantes :

(42) formation d'un premier paramètre de gaz d'échappement $NO_x$ (msnohk) et d'une première valeur (mnospm) pour la charge du catalyseur accumulateur d'oxydes d'azote $NO_x$ (32) à l'aide d'un modèle de calcul (42) en utilisant comme paramètre modèle une première valeur (MNODB-1) pour la capacité d'accumulation,
(54) formation d'un second paramètre d'oxydes d'azote de gaz d'échappement $NO_x$ (msnohk-mess) en fonction d'un signal d'un capteur de gaz d'échappement (36) installé en aval du catalyseur accumulateur d'oxydes d'azote $NO_x$ (32),
(57) adaptation du premier paramètre de gaz d'échappement $NO_x$ (msnohk) au second paramètre de gaz d'échappement $NO_x$ (msnohk-mess) en modifiant le paramètre du modèle par une valeur d'adaptation (d) pour passer à une seconde valeur (MNODB-2) de la capacité d'accumulation et
(66) évaluation de l'aptitude au fonctionnement du catalyseur accumulateur d'oxydes d'azote $NO_x$ (32) en fonction de la valeur d'adaptation (d),
**caractérisé en ce qu'**
(60) on détermine une charge effective (mnosp-real) du catalyseur accumulateur d'oxydes d'azote $NO_x$ (32) et
(64) on corrige la valeur d'adaptation (d) du diagnostic en fonction de la charge effective (mnosp-real).

**2.** Procédé selon la revendication 1,
**caractérisé en ce qu'**
on corrige la valeur d'adaptation (d) avec un coefficient de déviation qui est le quotient de la première valeur (mnsopm) pour la charge, du dénominateur et de la charge effectivement déterminée (mnosp-real), au numérateur.

**3.** Procédé selon la revendication 2,
**caractérisé en ce que**
la valeur d'adaptation (d) est divisée par la valeur de correction.

**4.** Procédé selon l'une des revendications 1 à 3,
**caractérisé en ce qu'**
on modélise le premier paramètre de gaz d'échappement $NO_x$ (msnohk) comme fonction d'un débit massique d'oxydes d'azote $NO_x$ (msnovk) arrivant dans le catalyseur accumulateur d'oxydes d'azote (32).

**5.** Procédé selon l'une des revendications précédentes,
**caractérisé en ce qu'**
on détermine le débit massique d'oxydes d'azote $NO_x$ (msnovk) arrivant dans le catalyseur accumulateur d'oxydes d'azote $NO_x$ (22) par un modèle d'émission brute (41).

**6.** Procédé selon l'une des revendications précédentes,
**caractérisé en ce qu'**
on détermine la charge effective (mnosp-real) à partir de la consommation d'agents de régénération dans le cas d'une régénération du catalyseur accumulateur d'oxydes d'azote $NO_x$ (32).

7. Procédé selon la revendication 6,
   **caractérisé en ce qu'**
   on détermine la consommation en agent de régénération à partir des valeurs correspondant au débit massique des gaz d'échappement par le catalyseur accumulateur d'oxydes d'azote $NO_x$ 32 qui ont été pondérées et ajoutées au cours d'une régénération avec une concentration en oxygène.

8. Procédé selon l'une quelconque des revendications précédentes,
   **caractérisé en ce qu'**
   on détermine le premier paramètre des gaz d'échappement (msnohk) et le second paramètre des gaz d'échappement (msnohk-mess) chaque fois comme débit massique d'oxydes d'azote $NO_x$ ou comme concentration d'oxydes d'azote $NO_x$.

9. Procédé selon l'une des revendications précédentes,
   **caractérisé en ce qu'**
   on adapte (57) le premier paramètre de gaz d'échappement $NO_x$ (msnohk) au second paramètre de gaz d'échappement $NO_x$ (msnohk-mess) en modifiant le paramètre du modèle (MNODB) avec une valeur d'adaptation (d) au cours d'une augmentation en oxydes d'azote $NO_x$ en aval du catalyseur accumulateur d'oxydes d'azote $NO_x$ (32), en phase de fonctionnement maigre (TM), avant une régénération du catalyseur accumulateur d'oxydes d'azote $NO_x$ (32).

10. Appareil de commande (40) pour évaluer la capacité de fonctionnement d'un catalyseur accumulateur d'oxydes d'azote $NO_x$ (32) dans les gaz d'échappement d'un moteur à combustion interne (10) par lequel l'appareil de commande (40) forme un premier paramètre de gaz d'échappement $NO_x$ (msnohk) et une première valeur (mnospm) pour le catalyseur accumulateur d'oxydes d'azote $NO_x$ (32) avec un modèle de calcul (42) en utilisant une première valeur (MNODB-1) pour la capacité d'accumulation comme paramètre de modèle, un second paramètre de gaz d'échappement $NO_x$ (msnohk-mess) en fonction d'un signal fourni par un capteur de gaz d'échappement (36) installé en aval du catalyseur accumulateur d'oxydes d'azote ($NO_x$) (32), on adapte le premier paramètre de gaz d'échappement $NO_x$ (msnohk) au second paramètre de gaz d'échappement $NO_x$ (msnohk-mess) par modification du paramètre du modèle (MNODB) avec une valeur d'adaptation (d) pour passer à une seconde valeur (MNODB-2) de la capacité de l'accumulateur et on évalue l'aptitude au fonctionnement du catalyseur accumulateur d'oxydes d'azote $NO_x$ (32) en fonction de la valeur d'adaptation (d),
    **caractérisé en ce que**
    l'appareil de commande (40) détermine une charge effective (mnosp-real) du catalyseur accumulateur d'oxydes d'azote $NO_x$ (32) et on corrige la valeur d'adaptation (d) du diagnostic en fonction de la charge effective (mnosp-real).

11. Appareil de commande (40) selon la revendication 10,
    **caractérisé en ce qu'**
    il commande l'exécution du procédé selon l'une des revendications 2 à 9.

Fig. 1

EP 1 798 392 B1

**Fig. 2**

Rohmassenmodell msnovk — 41

Rechenmodell
msnohk
mnospm — 42

Bilde
msnohk_mess — 54

Anpassung — 57

Ermittle
mnosp_real — 60

d → d_korr — 64

d_korr > s ? — 66

j

n

32 n.i.O. — 68

32 i.O. — 70

# Fig. 3

Masse NOx [g]

2,4

2,0

46

44

48

50

52

a)

56

58

t1

b)

d

1,00

0,83

Adaptions-faktor

c)

O2-Signal NOx-Sensor [V]

0,6

62

d)

Lambda

1,0

TM

TR

TM

e)

**EP 1 798 392 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10318116 A1
- DE 10318116
- DE 10218116